# EUROPÄISCHE PATENTANMELDUNG

(11) **EP 0 849 862 A2**
(43) Veröffentlichungstag der Anmeldung: **24.06.1998**
(21) Anmeldenummer: 97810924.7
(22) Anmeldetag: 28.11.1997
(51) Int. Cl.: H02K 3/24

(54) **Gasgekühlte elektrische Maschine**

(30) Priorität: 19.12.1996 DE 19653060
(71) Anmelder: Asea Brown Boveri AG, 5401 Baden (CH)
(72) Erfinder: Hediger, Daniel, 5504 Ohtmarsingen (CH); Stallone, Francesco, 6600 Locarno (CH)
(74) Vertreter: Weibel, Beat

(57) **Zusammenfassung**

Bei einer gasgekühlten elektrische Maschine werden die Leiterstäbe (3,4) im Wickelkopf durch einen Teilstrom des Kühlgasstroms, der durch innerhalb der Ösen (5a, 5b) der Stabenden gelegene Kühlkanäle (8) geführt ist, direkt gekühlt. Zu diesem Zweck sind die Stabebenen der als Zweiebenenstab ausgeführten Wicklungsstäbe im Ösenbereich voneinander distanziert, und bilden somit einen radialen Kühlkanal (8) aus. Diese radialen Kühlkanäle (8) sind an den Ableitösen (5b) mit Rohrverbindungen (10), die elektrisch und strömungstechnisch mit Rundverbindungen (20) gekoppelt sind. Die Kühlkanäle (9) der Rundverbindungen (20) sind mit einem vom Wickelkopfraum (30) durch eine Trennwand (33) getrennten Saugraum (32) des Maschinenventilators mittels Isolierrohren (31) oder Isolierschläuchen verbunden. Die Anströmung der Kühlkanäle 8 in radialer Strömungsrichtung wird forciert durch eine Verschalung 34, die ringförmig im Wickelkopfraum den Stirnseiten der Ösen (5a, 5b) benachbart angeordnet ist.

## Beschreibung

### TECHNISCHES GEBIET

Die Erfindung betrifft eine gasgekühlte elektrische Maschine, wie sie im Oberbegriff des ersten Anspruchs beschrieben ist.

Die Erfindung geht dabei aus von einem Stand der Technik, wie er sich beispielsweise aus der EP-0 519 091 B1 ergibt.

### TECHNOLOGISCHER HINTERGRUND UND STAND DER TECHNIK

Bei elektrischen Maschinen mit indirekt gekühlter Statorwicklung werden die Stirnbügel und die mit ihnen verbundenen, sogenannten Rundverbindungen oder Phasenverbindungen im Wickelkopf durch einen Teilstrom des durch den Ventilator geförderten Kühlgasstroms gekühlt. Bei Grenzleistungsmaschinen sind die Stirnbügel und die Phasenverbindungen durch zu hohe Erwärmung gefährdet. Während der in den Wicklungsnuten eingebettete Teil der Wicklung gezielt gekühlt wird, erwärmen sich diese freiliegenden Wicklungsteile nicht nur durch den Stromfluss sondern auch durch die magnetischen Felder im Wickelkopfraum.

Bei rotierenden elektrischen Maschinen mit direkt gekühlter Statorwicklung besteht die Wicklung aus massiven und hohlen Teilleitern, bei manchen Maschinentypen sogar nur aus Hohlleitern. Das durch die Hohlleiter durch die gesamte Länge der Statorstäbe strömende Kühlmittel bewirkt dabei auch eine ausreichende Kühlung der Stäbe im Wickelkopf. Die Rundverbindungen oder Phasenverbindungen werden ebenfalls als Hohlleiter ausgeführt und forciert mittels Kühlmittel gekühlt.

Bei luftgekühlten Maschinen und einseitiger Einspeisung ist die Kühlwirkung insbesondere bei grossen Maschinenlängen nicht mehr ausreichend. Um die Kühlwirkung zu steigern wird deshalb in der EP-0 392 243 B1 vorgeschlagen, die aus massiven Teilleitern aufgebauten Wicklungsstäbe mit seitlichen oder zwischen den beiden Teilleiterstapeln liegenden metallischen Kühlrohren/Kühlkanälen zu versehen. Sie sind gegeneinander und gegenüber den Teilleitern isoliert und liegen innerhalb der Hauptisolierung. Die Speisung erfolgt von beiden Maschinenseiten und von der Maschinenmitte aus. Die Zufuhr in Maschinenmitte erfolgt dabei durch radiale Kanäle im Statorblechkörper und Öffnungen in der Hauptisolierung. Das erwärmte Kühlgas verlässt die Kühlkanäle durch Öffnungen in der Hauptisolierung im Bereich der Endzonen des Statorblechkörpers und durch radiale Kanäle im Statorblechkörper.

Die Ausrüstung von Statorwicklungsstäben mit zusätzlichen Kanälen und das Einbringen von derartigen Kanälen in den Stab vermindern den Nutfüllfaktor. Die zur Zu- und Abfuhr des Kühlgases dienenden Formstücke, die grösstenteils in die Hauptisolierung eingebettet sind, verteuern die Herstellung der Stäbe. Zudem bleibt die Kühlung der im Wickelkopf angeordneten Rundverbindungen ausser Betracht.

Aus der EP-0 519 091 B1 ist eine gasgekühlte elektrische Maschine bekannt, bei der nur die der elektrischen und mechanischen Verbindung dienenden metallischen Ösen eigens gekühlt werden. Dort sind die Ösen mit Kappen versehen, welche die Ösen unter Freilassung eines oder mehrerer annähernd axial verlaufender Kanäle praktisch vollständig umgeben. Diese Kanäle sind gegen den Statorblechkörper hin offen. Eine radial verlaufende Trennwand trennt den Wickelkopfraum vom Ansaugraum des Maschinenventilators. Die Kappen weisen an ihren trennwandseitigen Enden eine Öffnung auf, die mit den besagten Kanälen in freier Verbindung steht. Von dieser Öffnung führt eine flexible Leitung direkt in den Ansaugraum des Ventilators. Infolge der Druckdifferenz zwischen Ansaugraum und Wickelkopfraum strömt ein Teil des vom Ventilator geförderten Kühlmittels durch besagte Kanäle und kühlt die Ösen und in geringem Masse auch die äussersten Stabenden. Als nachteilig könnte es angesehen werden, dass zur Kühlung der Ösen Kühlgas herangezogen wird, das bereits beim Umströmen der Stirnbügel im Wickelkopf aufgeheizt wurde, also eine eingeschränkte Kühlwirkung entfaltet.

### KURZE DARSTELLUNG DER ERFINDUNG

Der Erfindung liegt die Aufgabe zugrunde, eine elektrische Maschine der eingangs genannten Gattung zu schaffen, deren Statorwicklungsenden und die an diese Statorwicklungsenden angeschlossenen Rundverbindungen im Wickelkopfraum mit einfachen Mitteln ausreichend gekühlt werden können.

Erfindungsgemäss wird diese Aufgabe durch die Merkmale des ersten Anspruchs gelöst.

Die Vorteile der Erfindung sind unter anderem darin zu sehen, dass durch radiale erste Kühlkanäle im Bereich aller Ösen eine ausreichende Kühlung der Stabenden mittels eines Kühlgasstroms erreicht wird, wobei zudem diese ersten Kühlkanäle an Ableitösen in direkter Verbindung mit zweiten Kühlkanälen der als Hohlleiter ausgeführten Rundverbindungen stehen. Diese zweiten Kühlkanäle sind mittels Isolierschläuchen oder -rohren mit einem vom Wickelkopfraum durch eine Trennwand getrennten Raum verbunden, wodurch eine forcierte Kühlung der Rundverbindungen in Verbindung mit den Ableitösen möglich ist. Von besonderem Vorteil ist, wenn stirnseitig aller Ösen mit konstantem Abstand zu denselben eine Verschalung zwecks Strömungsführung der Luft an der Trennwand angeordnet ist, so dass eine forcierte Luftströmung durch die ersten Kühlkanäle erzwungen wird.

Bei einer bevorzugten Ausführungsform ist vorgesehen, dass die Statorwicklungsstäbe als Zweiebenenstäbe ausgeführt sind, deren Stabebenen im Wickelkopfbereich jeweils mittels einer Keileinlage voneinander beabstandet sind, so dass sich an den Stabenden die radialen ersten Kühlkanäle ausbilden. Die die Stabenden fixierenden Ösen bestehen aus Verbindungsstücken, die ebenfalls im Bereich der ersten Kühlkanäle beabstandet sind. Diese Ösen sind umgeben von Isolierkappen, die für die ersten Kühlkanäle jeweils eine Einlass- und eine Auslassöffnung aufweisen.

Besonders vorteilhaft ist es, wenn der Kühlgasstrom von radial aussen nach radial innen den Wickelkopf und damit die Ösen der Stabenden durchströmt.

Die Lösung beruht insbesondere auf der Idee, die Kühlung im Aktivteil in herkömmlichen Sinne, also als indirekte Kühlung, zu realisieren, und die den Stirnfeldern ausgesetzten Stabenden und Rundverbindungen im Wickelkopf in Kombination mittels beaufschlagter Kühlung direkt zu kühlen.

Ein Ausführungsbeispiel der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: einen Ausschnitt einer schematischen Abwicklung des Statorwickelkopfes einer gasgekühlten elektrischen Maschine;
- Fig.2: einen Querschnitt durch Stabenden im Statorwickelkopf gemäss Fig.1 längs deren Linie DD;
- Fig.3: einen Längsschnitt durch ein Stabende gemäss Fig.2 längs deren Linie CC;
- Fig.4: einen Längsschnitt durch Ableitösen gemäss Fig.2 längs deren Linien AA oder BB mit den an die Ableitösen angeschlossenen Rundverbindungen und einer Verschalung zur Luftführung;
- Fig.5: einen Längsschnitt durch eine Normalöse gemäss Fig.2 längs deren Linie EE mit der Verschalung zur Luftführung;

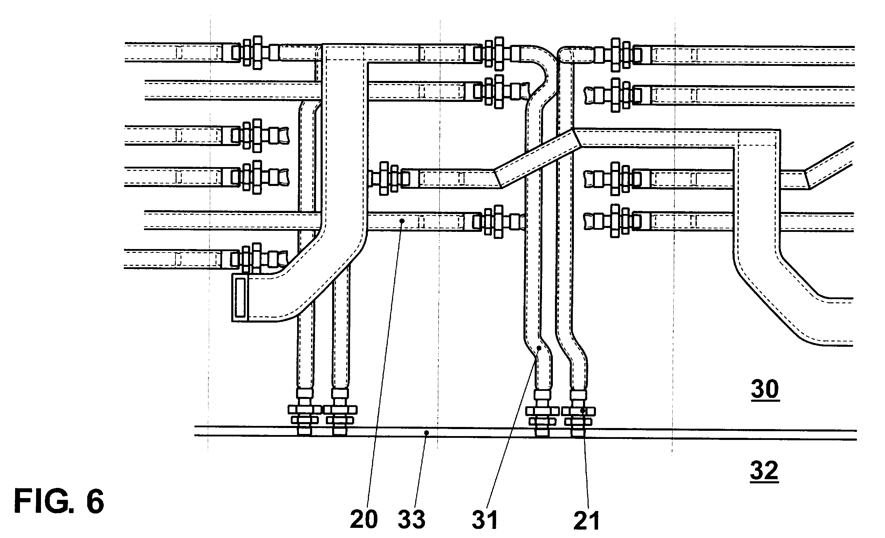

- Fig.6: einen Ausschnitt einer schematischen Abwicklung der Rundverbindungen.

### WEG ZUR AUSFÜHRUNG DER ERFINDUNG

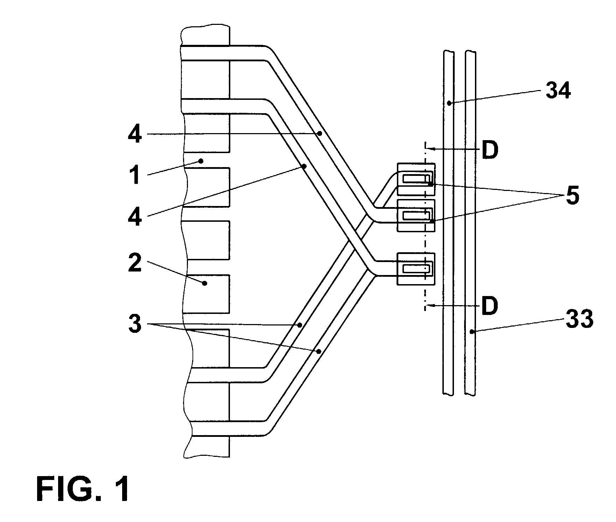

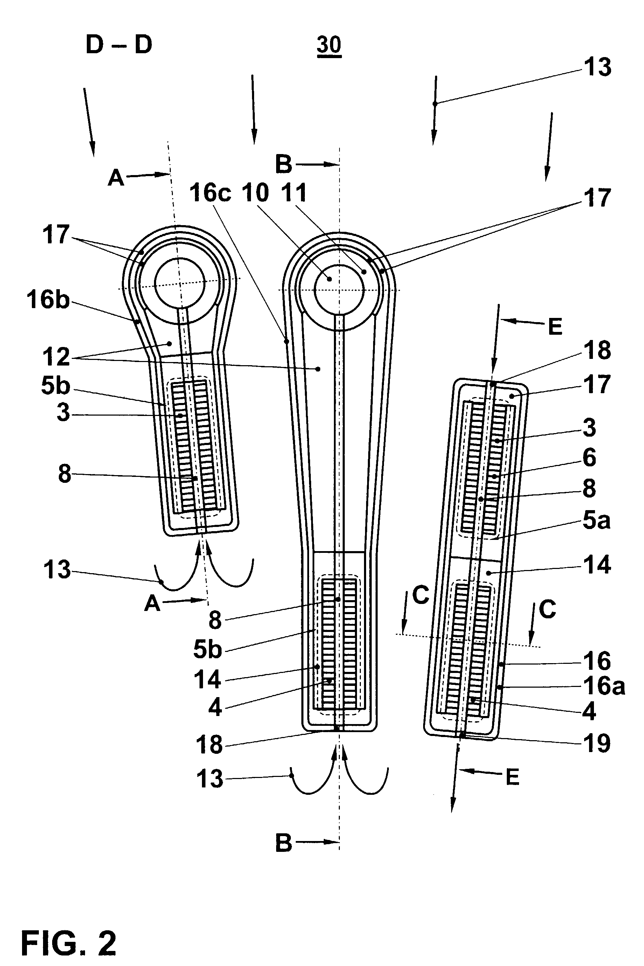

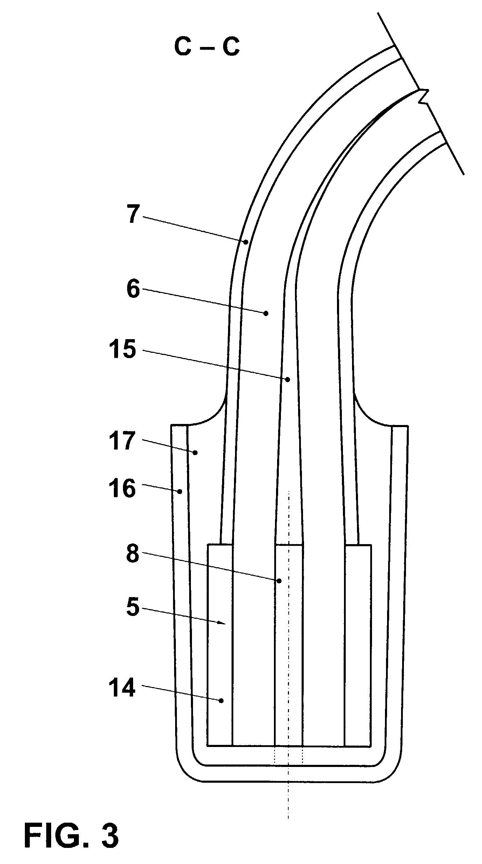

In der Zeichnung ist in Fig. 1 ein stark vereinfachter Ausschnitt einer schematischen Abwicklung des Statorwickelkopfes einer gasgekühlten elektrischen Maschine dargestellt. In jeder Statornut 1 des Statorblechkörpers 2 liegen jeweils ein Unterstab 3 und ein Oberstab 4 übereinander. Aus Gründen einer übersichtlicheren Darstellung sind in Fig.1 nur zwei Unterstäbe und zwei Oberstäbe eingezeichnet. In üblicher Weise sind jeweils ein Unterstab 3 und ein Oberstab 4 aus verschiedenen Nuten 1 kommend mittels elektrisch isolierter Ösen 5 elektrisch und mechanisch miteinander verbunden und auf diese Weise zu einer Wicklung zusammengeschaltet. Die Gesamtheit aller aus dem Statorblechkörper 2 austretenden Unter- und Oberstäbe samt den Ösen 5 bildet den Statorwickelkopf. Unter- und Oberstäbe bestehen aus einer Vielzahl elektrisch gegeneinander isolierter Teilleiter 6, die verteilt auf zwei nebeneinander liegende Teilleiterstapel von einer gemeinsamen Hauptisolierung 7 umgeben sind, die bis an die Öse 5 heranreicht (vgl. Fig.2 und 3). Ein derartiger Statorwicklungsstab ist auch bekannt als Zweiebenenstab. Insoweit sind elektrische Maschinen bekannt.

In Verbindung mit Fig.3 wird der Aufbau der Stabenden mit Ösen 5a, 5b wie folgt beschrieben: Einzelne Teilleiter 6 bilden übereinanderliegend zwei Teilleiterstapel, so dass sich für den Unterstab 3 beziehungsweise Oberstab 4 ein Zweiebenenstab ergibt. Zu den Stabenden hin sind die Teilleiterstapel derart mittels einer Keileinlage 15 voneinander distanziert, dass sich zwischen den Stabebenen am jeweiligen Stabende der Kühlkanal 8 ausbildet. Die das Stabende umgebende Öse 5a, 5b umfasst L-förmige metallische Verbindungsstücke 14, welche die Stabebenen aufnehmen. Dort sind die Teilleiter 6 unter sich und mit den L-förmigen Verbindungsstücken 14 durch Lötung elektrisch und mechanisch verbunden, wobei die Verbindungsstücke 14 fluchtend an den Stirnseiten ihrer kurzen Schenkel mit dem Kühlkanal 8 eine Öffnung für eine Kühlmittelströmung bereitstellen. Die aus den L-förmigen Verbindungsstücken 14 aufgebaute Öse 5a, 5b ist von einer Isolierkappe 16a, 16b, 16c umgeben, wobei der Zwischenraum zwischen Isolierkappe 16a, 16b, 16c und Öse 5 mit einem Füllmaterial 17 ausgefüllt ist.

Unterschieden wird hierbei zwischen Normalösen 5a und sogenannten Ableitösen 5b. So werden in einer aus vier L-förmigen Verbindungsstücken 14 aufgebauten Normalöse 5a die Stabenden je eines Unterstabs 3 und eines Oberstabs 4 zusammengefügt und mit einer Isolierkappe 16a umgeben. Dabei weist die Isolierkappe 16a an der Unterstabseite eine Einlassöffnung 18 und an der Oberstabseite eine Auslassöffnung 19 für den Kühlkanal 8 auf. Die Strömungsrichtung des Kühlgases ist mit 13 bezeichnet. Wesentlich für die optimale Kühlung mittels Durchströmung der Stabenden mit Normalösen 5a ist eine radiale Kühlgaszuführung. Im Ausführungsfall ist eine Strömungsrichtung 13 des Kühlgases vom Wickelkopfaussenumfang zum Wickelkopfinnenumfang gewählt.

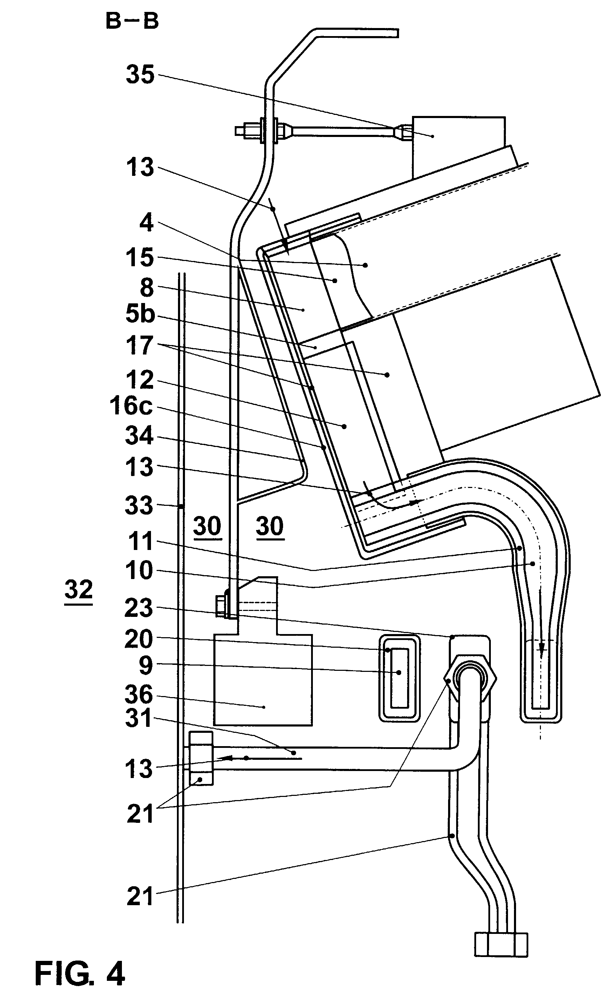

Die Kühlung der Stabenden in den Ableitösen 5b erfolgt gleichermassen wie die Kühlung der Stabenden in Normalösen 5a. Ableitösen 5b stellen eine elektrische Verbindung zu den den Wickelkopf an seinem Aussenumfang umgebenden Rundverbindungen oder Phasenverbindungen 20 bereit (vgl. Fig.4), wobei diese Rundverbindungen mit den (nicht dargestellten) Generatorklemmen leitend verbunden sind. Erfindungsgemäss werden Ableitösen 5b jeweils um ein Stabende, also das Stabende eines Oberstabs 4 oder Unterstabs 3, installiert. Der prinzipielle Aufbau der Ableitösen 5b an Oberstabenden oder Unterstabenden ist allerdings identisch, weshalb in Fig.4 lediglich eine Schnittdarstellung für die in Fig.3 gezeigten Schnitte AA und BB erfolgt. Der Aufbau der Kühlanordnung an einer Ableitöse 5b wird darum im folgenden auf eine Anordnung an einem Oberstabende 4 reduziert.

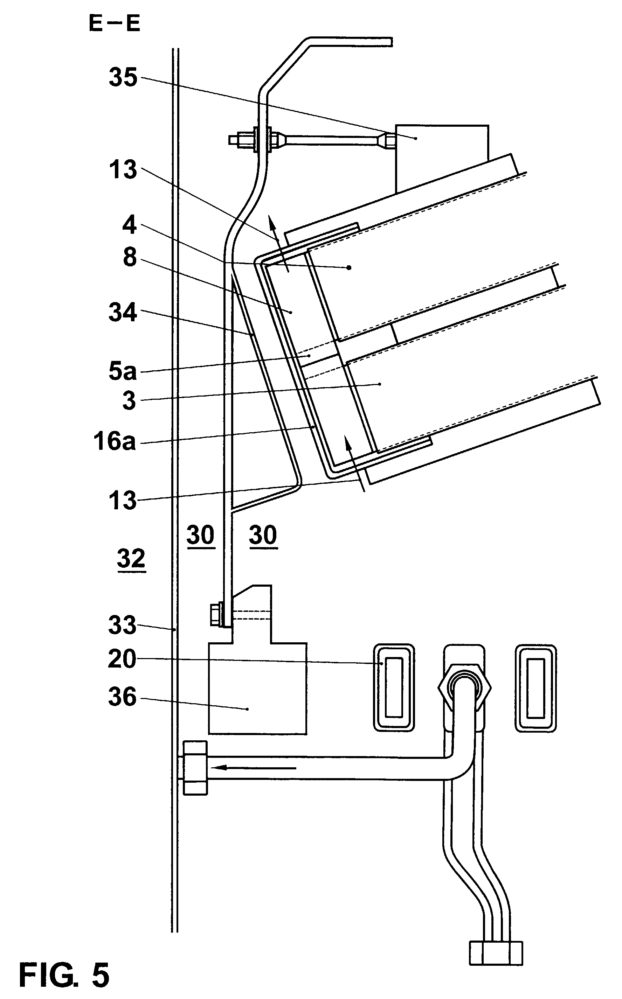

Wie bereits beschrieben wurde, sind die mittels Keileinlage 15 distanzierten Stabebenen in einer Ableitöse 5b von L-förmigen Verbindungsstücken 14, in diesem Fall zwei, eingefasst. An den kurzen Schenkeln der L-förmigen Verbindungsstücke 14 sind die Ableitösen 5b über metallische Verbindungsstücke 12 mit einer Rohrverbindung 11 elektrisch und hinsichtlich des Strömungskanals 8 durch die Ableitöse 5b verbunden. Die Ableitöse 5b ist mit dem Ende der Rohrverbindung 11 von einer Isolierkappe 16c ummantelt, die am Wickelkopfinnenumfang eine Einlassöffnung 18 für das Kühlgas aufweist. Die Rohrverbindung 11 führt zu einer den Wickelkopf radial aussen umgebenden Rundverbindung 20, wie Fig.4 zeigt. Um einer übersichtlichen Darstellung Rechnung zu tragen, sind die elektrischen und strömungstechnischen Anschlüssen der Rundverbindung 20 getrennt dargestellt, obschon jede Rundverbindung 20 mit allen diesen Anschlüssen versehen ist. Die Rundverbindungen 20 weisen ein Rechteckprofil auf und sind als Hohlleiter mit einem Kühlkanal 9 ausgeführt. In Hintereinanderschaltung stehen die Kühlkanäle 8 der Stabebenen 5b mit Kühlkanälen 10 der Rohrverbindungen 11 und mit Kühlkanälen 9 der Rundverbindungen 20 in freier Verbindung. Jede Rundverbindung 20 ist mit einer Abschlusskappen 23 verschlossen, wobei der Kühlkanal 9 durch die Abschlusskappe 23 und eine Schraubverbindung 21 in ein Isolierrohr 31 mündet. Das Isolierrohr 31 ist an seiner anderen Seite ebenfalls mittels einer Schraubverbindung an einer Trennwand 33 fixiert. Wie auch die abgewickelte Darstellung der Rundverbindungen 20 in Fig.5 erhellt, verbinden die Isolierrohre 31 unter Umgehung des Wickelkopfraumes 30 die Kühlkanäle 9 der Rundverbindungen 20 mit einem Unterdruckraum 32, z.B. dem Saugraum des (nicht gezeichneten) Maschinenventilators, der vom Wickelkopfraum 30 durch die radial verlaufende Trennwand 33 separiert ist. Für die elektrische Verbindung zu den nicht dargestellten Generatorklemmen sind massiv ausgebildete Ableitungen 22 besorgt. Die Isolierrohre 31 können selbstverständlich auch als Isolierschläuche ausgeführt sein, und bestehen vorzugsweise aus Teflon. Die Kühlkanäle 8 der Ableitösen 5b stehen somit in freier Verbindung mit dem Saugraum 32 des Maschinenventilators, wodurch eine forcierte Kühlung der Ableitösen 5b und der Rundverbindungen 20 gewährleistet ist.

Aufgrund der Druckdifferenz in Saugraum 32 und Wickelkopfraum 30 strömt ein Teilstrom des vom Maschinenventilator geförderten Kühlgases, in Fig.4 durch Pfeile 13 symbolisiert, durch den Kühlkanal 8, dann durch den Kühlkanal 10 in der Rohrverbindung 11, dann durch den Kühlkanal 9 der Rundverbindung 20 und verlässt diese durch das Isolierrohr 31 in den Saugraum 32 des Maschinenventilators.

Einen prinzipiell gleichen Aufbau bis auf die Verbindungen zu den Rundverbindungen 20 zeigen die Normalösen 5a, die beispielhaft in einem Längsschnitt in Fig.5 dargestellt sind. Die Isolierkappe 16a umschliesst die Stabenden des Unterstabes 3 und des Oberstabes 4 wobei ebenfalls ein radialer Kühlkanal 8 frei bleibt. Für eine gezielte Anströmung diese Kühlkanals 13 ist eine Verschalung 34 gegenüber den Stirnseiten der Isolierkappe 16a angeordnet. Diese Verschalung 34 ist im gesamten Wickelkopfraum ringförmig derart den Stirnseiten aller Isolierkappen 16a, 16b, 16c benachbart angeordnet (vgl. auch Fig.4), so dass sich ein eingeschränkter Strömungskanal zwischen den Isolierkappen 16a, b, c und der Verschalung 34 ausbildet und somit die Strömung in Strömungsrichtung 13 durch die Kühlkanäle 8 forciert hindurch getrieben wird von radial aussen nach radial innen des Wickelkopfraumes 30. Die Verschalung 34 ist mittels Verschraubung befestigt an einem Innenring 35 und einem Aussenring 36, welche Ringe 35, 36 ohnehin für die Abstützung des Wickelkopfes in der elektrischen Maschine Verwendung finden. Für die optimale Kühlung der Normalösen 5a wird also zum einen die Druckdifferenz des Kühlmittels von radial aussen nach radial innen im Wickelkopfraum ausgenutzt, wobei eine Strömungshilfe in Form einer Verschalung 34 die Kühlmittelströmung 13 in radialer Richtung durch die Kühlkanäle 8 lenkt.

Selbstverständlich ist auch der umgekehrte Strömungsverlauf möglich, wenn bei geänderter Konfiguration das Kühlgas radial innen zugeführt wird und anschliessend nach radial aussen durch die Kühlkanäle 8 strömt.

Die erfindungsgemässe Ausstattung von Ösen 5a, 5b mit radialen Kühlkanälen 8 an den Stabenden in Kombination mit Kühlkanälen 9 für die Rundverbindungen 20 und einer den Stirnseiten der Ösen 5a, 5b benachbart angeordnete Verschalung 34 gewährleistet eine optimale und zudem vergleichsweise einfache Kühlungsanordnung für alle elektrischen Leitungselemente im Wickelkopfbereich von Grenzleistungsmaschinen.

### BEZEICHNUNGSLISTE

- 1: Nuten in 2
- 2: Statorblechkörper
- 3: Unterstäbe
- 4: Oberstäbe
- 5: Ösen
- 5a: Normalösen
- 5b: Ableitösen
- 6: Teilleiter
- 7: Hauptisolierung
- 8, 9, 10: Kühlkanäle
- 11: Rohrverbindung
- 12: Verbindungsstück
- 13: Strömungsrichtung des Kühlmittels
- 14: L-förmiges Verbindungsstück
- 15: Keileinlage
- 16, 16a,b,c: Isolierkappe
- 17: Füllmaterial
- 18: Einlassöffnung
- 19: Auslassöffnung
- 20: Rundverbindung/Phasenverbindung
- 21: Schraubverbindung
- 22: Ableitung
- 23: Abschlusskappen
- 30: Wickelkopfraum
- 31: Isolierrohr oder Isolierschlauch
- 32: Saugraum des Maschinenventilators
- 33: Trennwand zwischen 30 und 32
- 34: Verschalung
- 35: Innenring
- 36: Aussenring

## Patentansprüche

1. Gasgekühlte elektrische Maschine mit einer in Nuten (1) des Statorblechkörpers (2) angeordneten Statorwicklung, im wesentlichen bestehend aus jeweils zwei in einer Nut (1) übereinanderliegenden, aus gegeneinander isolierten Teilleitern (6) aufgebauten Statorwicklungsstäben (3, 4), die ausserhalb des Statorblechkörpers (2) im Wickelkopf mittels Ösen (5a, 5b) und Rundverbindungen (20) elektrisch miteinander zu einer Wicklung verbunden sind, wobei die Ösen (5a, 5b) eine Anzahl Normalösen (5a) und eine Anzahl Ableitösen (5b) umfasst, und einem Ventilator zur Erzeugung eines Kühlgasstroms durch die Maschine, wobei ein Teilstrom dieses Kühlgasstroms durch innerhalb der Ösen (5a, 5b) gelegene erste Kühlkanäle (8) geführt ist, dadurch gekennzeichnet,
- dass die Statorwicklungsstäbe im Wickelkopf nur im Bereich der Ösen (5a, 5b) mit besagten ersten Kühlkanälen (8) versehen sind, wobei diese ersten Kühlkanäle (8) im wesentlichen radial verlaufen,
- dass die Ableitösen (5b) abströmseitig der ersten Kühlkanäle (8) zwischen sich und den als Hohlleiter ausgeführten Rundverbindungen (20) Rohrverbindungen (11) aufweisen, wobei die Rundverbindungen (20) als Hohlleiter mit zweiten Kühlkanälen (9) ausgeführt sind, die in freier Verbindung zu den ersten Kühlkanälen (8) der Ableitösen (5b) stehen,
- dass die zweiten Kühlkanäle (9) der Rundverbindungen (20) mit einem vom Wickelkopfraum (30) durch eine Trennwand (33) getrennten Raum (32) mittels Isolierrohren (31) oder Isolierschläuchen verbunden sind, und
- dass zwischen der Trennwand (33) und den Stirnseiten der Ösen (5a, 5b) eine Verschalung (34) zum forcierten Durchströmen der ersten Kühlkanäle (8) durch die Normalösen (5a) vorgesehen ist.

2. Elektrische Maschine nach Anspruch 1,
dadurch gekennzeichnet,
dass die Statorwicklungsstäbe (34) als Zweiebenenstäbe ausgeführt sind, deren Stabebenen im Wickelkopfbereich jeweils mittels einer Keileinlage (15) voneinander beabstandet sind, so dass sich an den Stabenden die radialen ersten Kühlkanäle (8) ausbilden.

3. Elektrische Maschine nach Anspruch 2,
dadurch gekennzeichnet,
dass die Ösen (5a, 5b) aus metallischen Verbindungsstücken (14) aufgebaut sind, die im Bereich der ersten Kühlkanäle (8) voneinander beabstandet sind.

4. Elektrische Maschine nach Anspruch 1,
dadurch gekennzeichnet,
dass der den Wickelkopf kühlenden Teilstrom des Kühlgasstroms eine im wesentlichen radiale Strömungsrichtung (13) aufweist.

5. Elektrische Maschine nach Anspruch 1,
dadurch gekennzeichnet,
dass die Ösen (5a, 5b) von Isolierkappen (16a, 16b, 16c) umgeben sind, die Einlass- und/oder Auslassöffnungen (18, 19) für die ersten Kühlkanäle (8) aufweisen.

6. Elektrische Maschine nach Anspruch 1,
dadurch gekennzeichnet,
dass der durch die Trennwand (33) vom Wickelkopfraum (30) getrennte Raum (32) der Saugraum des Maschinenventilators ist.

7. Elektrische Maschine nach Anspruch 1,
dadurch gekennzeichnet,
dass die Verschalung (34) ringförmig mit konstantem Abstand gegenüber den Stirnseiten der Ösen (5a, 5b) angeordnet ist, wobei sich ein begrenzter Strömungskanal zwischen den Stirnseiten der Ösen (5a, 5b) und der Verschalung (34) ausbildet.
